# EUROPEAN PATENT APPLICATION

(11) **EP 2 724 772 A1**
(43) Date of publication of application: **30.04.2014**
(21) Application number: 13180815.6
(22) Date of filing: 19.08.2013
(51) Int. Cl.: B01D 53/86

(54) **Arrangement of a flue gas treatment system and a combustion device**

(30) Priority: 26.10.2012 EP 12190213; 18.06.2013 EP 13172579; 18.06.2013 EP 13172576
(71) Applicant: Alstom Technology Ltd, 5400 Baden (CH)
(72) Inventor: Nilsson, Lars, 36040 Rottne (SE); Amann, Jean-Marc Gilbert, 35261 Växjö (SE); Böös, Erik W., 35594 Vederslöv (SE); Grubbström, Jörgen Per-Olof, 352 55 Vaxjo (SE); Wang, Wuyin, 352 49 Växjö (SE)

(57) **Abstract**

The invention refers to an arrangement of a flue gas treatment system (1) and a combustion device (2). The flue gas treatment system (1) comprises a recirculation line (10) to supply at least a part of the flue gas from the combustion device (2) back to the combustion device (2), a selective catalytic reduction unit (SCR), a gas processing unit (GPU) to separate CO₂ from the flue gas. The recirculation line (10) departs upstream of the selective catalytic reduction unit (SCR), and the selective catalytic reduction unit (SCR) is upstream of the gas processing unit (GPU).

## Description

### TECHNICAL FIELD

The present disclosure relates to an arrangement of a flue gas treatment system and a combustion device. The boiler is preferably an oxyfired boiler, i.e. a boiler in which a fuel is combusted using pure or almost pure oxygen as an oxidizing agent.

### BACKGROUND

It is known to provide flue gas treatment systems downstream of boilers.

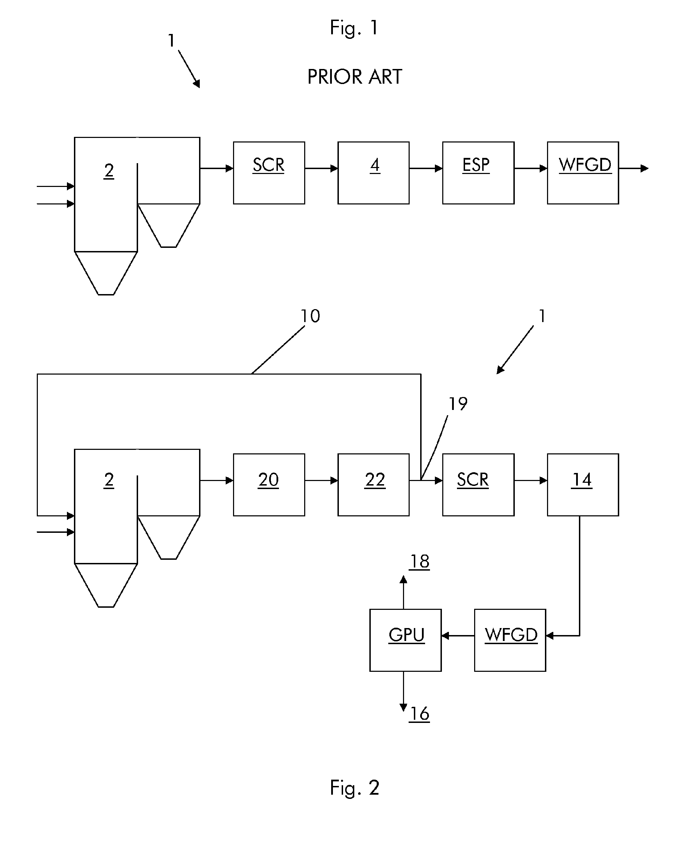

Figure 1 shows an example of a known flue gas treatment system 1 connected to a combustion device 2 such as a boiler.

Figure 1 shows that the flue gas treatment system 1 has a selective catalytic reduction unit SCR located immediately downstream of the combustion device 2; at the selective catalytic reduction unit SCR NOₓ is converted into N₂ and H₂O. Downstream of the selective catalytic reduction unit SCR a pre-heater 4 is provided, to pre-heat the air to be provided to the boiler (namely to the combustion chamber of the boiler). Thus an electrostatic precipitator ESP for removal of particles and a wet flue gas desulphurization WFGD are provided. From the wet flue gas desulphurization WFGD the flue gas is sent to the stack.

The known flue gas treatment system has some drawbacks.

In fact, since all flue gas has to pass through the selective catalytic reduction unit SCR, the selective catalytic reduction unit SCR must have a large size (i.e. large enough for the whole flue gas).

### SUMMARY

An aspect of the disclosure includes providing an arrangement of a flue gas treatment system and a combustion device by which the selective catalytic reduction unit SCR has a smaller dimension than what needed for known flue gas treatment systems.

This also favourably influences the costs that are reduced.

These and further aspects are attained by providing an arrangement of a flue gas treatment system and a combustion device in accordance with the accompanying claims.

### BRIEF DESCRIPTION OF THE DRAWINGS

Further characteristics and advantages will be more apparent from the description of a preferred but non-exclusive embodiment of the arrangement of the flue gas treatment system and a combustion device, illustrated by way of non-limiting example in the accompanying drawings, in which:
Figure 1 is a schematic view of a flue gas treatment system according to the prior art;
Figure 2 is a schematic view of a flue gas treatment system in an embodiment of the invention.

### DETAILED DESCRIPTION OF EXEMPLARY EMBODIMENTS

With reference to figure 2, this shows an arrangement of a flue gas treatment system 1 and a combustion device 2 such as a boiler. The boiler is preferably an oxyfiring boiler, i.e. a boiler having a combustion chamber that is supplied with a fuel (such as coal, oil, gas) and substantially pure oxygen (purity preferably greater that 95%). The main component of the flue gas generated in the oxyfired boiler is CO₂.

The flue gas treatment system 1 comprises a recirculation line 10 to supply at least a part of the flue gas generated at the the combustion device 2 back to the combustion device 2. For example 2/3 of the whole flue gas generated at the combustion device 2 are recirculated via the recirculation line 10 and the remaining 1/3 of the flue gas is further treated.

Downstream the recirculation line 10, a selective catalytic reduction unit SCR is provided. The selective catalytic reduction unit SCR operates at a substantially atmospheric pressure.

For example, the selective catalytic reduction unit SCR is defined by a bed or a structure of catalyst material through which the gas passes through. Upstream the selective catalytic reduction unit SCR a reducing agent like ammonia or urea is injected into the flue gas. In the selective catalytic reduction unit SCR unit the ammonia or the urea then reacts with the NOₓ present in the flue gas to form N₂ and H₂O.

The flue gas from the selective catalytic reduction unit SCR is preferably supplied into a heat exchanger 14 to recover heat, and then into a desulphurization unit such as a wet flue gas desulphurization WFGD defined by a absorption column (or a scrubber column, or a scrubber tower), in which typically scrubber liquid is sprayed from the top counter currently to the gas entering at the bottom of the column.

Downstream of the wet flue gas desulphurization WFGD a gas processing unit GPU is provided to separate CO₂ from the other gas of the flue gas.

The gas processing unit GPU separates a stream 16 of substantially pure CO₂ from a stream 18 of the remaining components of the flue gas that are mainly defined by Argon, N₂ and are usually vented.

The gas processing unit GPU for example comprises a compression step and a cooling step.

Advantageously, the recirculation line 10 departs upstream of the selective catalytic reduction unit SCR, and the selective catalytic reduction unit SCR is upstream of the gas processing unit GPU and operates at a substantially atmospheric pressure. Upstream and downstream are to be intended with reference to the flow of flue gas.

Between the combustion device 2 and the diverting 19 of the recirculation line 10, a heat exchanger 20 is preferably provided. Therefore the heat exchanger 20 is in the loop of the recirculation line 10. The heat exchanger 20 cools the flue gas upstream of the selective catalytic reduction unit SCR.

The heat exchanger 20 is preferably a preheater for an oxidiser such as oxygen to be supplied to the combustion device.

In addition, a dust removal unit 22 upstream of the selective catalytic reduction unit SCR can also be provided.

Advantageously the temperature of the flue gas at the outlet of the dust removal unit 22 fits the temperature needed at the selective catalytic reduction unit SCR. This is anyhow not mandatory and an additional heat exchanger (cooler or heater) can be provided to fit the temperature needed at the selective catalytic reduction unit SCR.

The operation of the arrangement is apparent from that described and illustrated and is substantially the following.

At the combustion device 2 a fuel is combusted with oxygen generating steam (that is for example expanded in a steam turbine) and flue gas.

The flue gas is directed through the preheater 20 where it is cooled (at the same time oxygen directed into the combustion chamber of the combustion device is heated). The cooled flue gas passes then through the dust removal unit 22 (such as an electrostatic precipitator or a filter) where dust and solid particles are removed from it.

The flue gas treated this way is split in a first part (about 2/3 of the total flue gas generated at the combustion device 2) that is recirculated back into the combustion chamber of the combustion device and a second part (about 1/3 of the total flue gas generated at the combustion device) that is supplied to the selective catalytic reduction unit SCR.

Since the amount of flue gas supplied to the selective catalytic reduction unit SCR is only a fraction of the total flue gas generated at the combustion device, the selective catalytic reduction unit SCR can have a size substantially smaller that the selective catalytic reduction unit size needed for traditional flue gas treatment systems.

At the selective catalytic reduction unit SCR a reducing agent like for example ammonia or urea is injected into the flue gas, such that NOₓ is converted into N₂ and H₂O. Typically the injection of the reducing agent occurs upstream of the selective catalytic reduction unit SCR.

At the heat exchanger 14 and wet flue gas desulphurization H₂O and SO₂ are respectively removed from the flue gas that is thus ready to enter the gas processing unit GPU.

At the gas processing unit GPU the flue gas is compressed and cooled to separate the CO₂ from the other components of the flue gas generating the stream 16 and 18.

Naturally the features described may be independently provided from one another.

In practice the materials used and the dimensions can be chosen at will according to requirements and to the state of the art.

### REFERENCE NUMBERS

- 1: flue gas treatment system
- 2: combustion device
- 4: preheater
- 10: recirculation line
- 14: heat exchanger
- 16: stream
- 18: stream
- 19: diverting
- 20: heat exchanger
- 22: dust removal unit
- SCR: selective catalytic reduction unit
- ESP: electrostatic precipitator
- WFGD: wet flue gas desulphurization
- GPU: gas processing unit

## Claims

1. An arrangement of a flue gas treatment system (1) and a combustion device (2), the flue gas treatment system (1) comprising
a recirculation line (10) to supply at least a part of the flue gas from the combustion device (2) back to the combustion device (2),
a selective catalytic reduction unit (SCR), **characterised in that**
the flue gas treatment system (1) comprises a gas processing unit (GPU) to separate CO₂ from the flue gas,
the recirculation line (10) departs upstream of the selective catalytic reduction unit (SCR),
the selective catalytic reduction unit (SCR) is upstream of the gas processing unit (GPU).

2. The arrangement according to claim 1, **characterised by** comprising a heat exchanger (20) for cooling the flue gas upstream of the selective catalytic reduction unit (SCR).

3. The arrangement according to claim 2, **characterised in that** the heat exchanger (20) is a preheater for an oxidiser to be supplied to the combustion device (2).

4. The arrangement according to claim 1, **characterised by** comprising a dust removal unit (22) upstream of the selective catalytic reduction unit (SCR).

5. The arrangement according to claim 4, **characterised in that** the temperature of the flue gas at the outlet of the dust removal unit (22) fits the temperature needed at the selective catalytic reduction unit (SCR).

6. The arrangement according to claim 1, **characterised by** comprising a heat exchanger (14) immediately downstream of the selective catalytic reduction unit (SCR).

7. The arrangement according to claim 1, **characterised in that** the gas processing unit (GPU) comprises at least a compressor step and a cooling step.

8. The arrangement according to claim 1, **characterised in that** at the selective catalytic reduction unit (SCR) a reducing agent is injected into the flue gas.

9. The arrangement according to claim 8, **characterised in that** the injection of the reducing agent occurs upstream of the selective catalytic reduction unit (SCR).

10. The arrangement according to claim 1, **characterised in that** the selective catalytic reduction unit (SCR) operates at a substantially atmospheric pressure.
